(19) Europäisches Patentamt
European Patent Office
Office européen des brevets

(11) EP 4 692 150 A1

(12) EUROPEAN PATENT APPLICATION
published in accordance with Art. 153(4) EPC

(43) Date of publication:
**11.02.2026 Bulletin 2026/07**

(21) Application number: **24784726.2**

(22) Date of filing: **21.03.2024**

(51) International Patent Classification (IPC):
***C08G 18/62*** *(2006.01)* ***C08G 18/16*** *(2006.01)*
***C08G 18/72*** *(2006.01)*

(52) Cooperative Patent Classification (CPC):
**C08G 18/16; C08G 18/62; C08G 18/72**

(86) International application number:
**PCT/JP2024/010920**

(87) International publication number:
**WO 2024/209935 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.04.2023 JP 2023060674**

(71) Applicant: **DIC Corporation**
**Tokyo 174-8520 (JP)**

(72) Inventors:
- **DOHI, Kenta**
  **Takaishi-shi, Osaka 592-0001 (JP)**
- **YAMADA, Shunsuke**
  **Sakura-shi, Chiba 285-8668 (JP)**
- **KON, Yoshihiro**
  **Tsukuba-shi, Ibaraki 305-8560 (JP)**
- **YADA, Akira**
  **Tsukuba-shi, Ibaraki 305-8560 (JP)**

(74) Representative: **TBK**
**Bavariaring 4-6**
**80336 München (DE)**

# (54) CURABLE COMPOSITION AND CURED PRODUCT OF SAME

(57) Provided is a curable composition containing an acrylic polymer (A) having a hydroxy group, a polyisocyanate compound (B), and a quaternary ammonium salt (C) represented by general formula (1), in which the content of the quaternary ammonium salt (C) is 0.4 to 3% by mass relative to the polymer (A). The curable composition has a long usable time and excellent curability and can form a cured product with excellent solvent resistance and hot water resistance. Thus, the curable composition can be suitably used for various coating materials for automotive interiors and exteriors, automobile repairs, plastics, films, industrial machines, building materials, and wood floor, and in-mold coating applications in which molding of a material such as plastic and coating are performed simultaneously in the same mold.

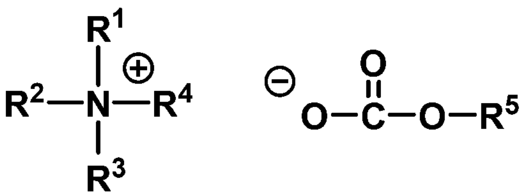

(1)

(In general formula (1), $R^1$ to $R^4$ each independently represent an alkyl group having 1 to 18 carbon atoms, and $R^5$ represents an alkyl group having 1 to 8 carbon atoms or a hydrogen group.)

EP 4 692 150 A1

## Description

Technical Field

The present invention relates to a curable composition and a cured product of the same.

Background Art

Conventionally, two-component urethane coating materials that combine a resin having a hydroxy group and a polyisocyanate compound have been used for various applications such as automotive interiors and exteriors, automobile repairs, plastics, industrial machines, and building materials.
In these coating materials, the compatibility between usable time and curability is a challenge. For example, a method of forming a cured coating film by applying a curable composition containing a resin having a hydroxy group, a polyisocyanate compound, and a quaternary ammonium carboxylate as a curing accelerator has been proposed (see, for example, PTL 1).
However, a coating film obtained from this curable composition has insufficient hot water resistance. Therefore, there is a need for materials with a long usable time and excellent coating film properties such as hot water resistance.

Citation List

Patent Literature

PTL 1: Japanese Patent No. 3867879

Summary of Invention

Technical Problem

An object of the present invention is to provide a curable composition that has a long usable time and excellent curability and can form a cured product with excellent solvent resistance and hot water resistance. Solution to Problem
The present inventors have intensively studied to achieve the object and found that a curable composition containing an acrylic polymer having a hydroxy group, a polyisocyanate compound, and a specific quaternary ammonium salt has a long usable time and excellent curability and can form a cured product with excellent solvent resistance and hot water resistance. This finding has led to completion of the invention.
Specifically, the present invention relates to a curable composition containing an acrylic polymer (A) having a hydroxy group, a polyisocyanate compound (B), and a quaternary ammonium salt (C) represented by general formula (1), in which the content of the quaternary ammonium salt (C) is 0.4 to 3% by mass relative to the polymer (A).

[Formula 1]

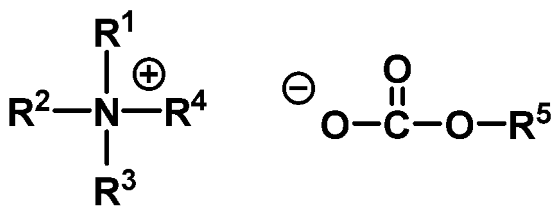

(1)

(In general formula (1), $R^1$ to $R^4$ each independently represent an alkyl group having 1 to 18 carbon atoms, and $R^5$ represents an alkyl group having 1 to 8 carbon atoms or a hydrogen group.)

Advantageous Effects of Invention

The curable composition of the present invention has a long usable time and excellent curability and can form a cured product with excellent solvent resistance and hot water resistance. Thus, the curable composition can be suitably used for various coating materials for automotive interiors and exteriors, automobile repairs, plastics, films, industrial machines, building materials, and wood floor, and in-mold coating applications in which molding of a material such as plastic and coating are performed simultaneously in the same mold.

Description of Embodiments

A curable composition of the present invention is a curable composition containing an acrylic polymer (A) having a hydroxy group, a polyisocyanate compound (B), and a quaternary ammonium salt (C) represented by general formula (1), in which the content of the quaternary ammonium salt (C) is 0.4 to 3% by mass relative to the polymer (A).

[Formula 2]

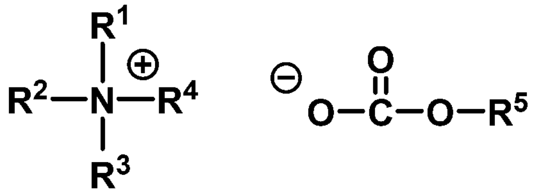

(1)

(In general formula (1), $R^1$ to $R^4$ each independently represent an alkyl group having 1 to 18 carbon atoms, and $R^5$ represents an alkyl group having 1 to 8 carbon atoms or a hydrogen group.)

The acrylic polymer (A) having a hydroxy group has two or more hydroxy groups and is obtained, for example, by copolymerizing an acrylic monomer (a1) having a hydroxy group and another monomer (a2).

Examples of the acrylic monomer (a1) having a hydroxy group include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, 1,4-cyclohexanedimethanol mono(meth)acrylate, N-(2-hydroxyethyl)(meth)acrylamide, glycerol mono(meth)acrylate, polyethylene glycol mono(meth)acrylate, polypropylene glycol mono(meth)acrylate, 2-hydroxy-3-phenoxypropyl (meth)acrylate, 2-(meth)acryloyloxyethyl-2-hydroxyethyl phthalate, and lactone-modified (meth)acrylate having a hydroxy group at an end. The acrylic monomers (a1) having a hydroxy group may be used alone, or two or more types thereof may be used in combination.

Examples of the other monomer (a2) include monomers having a carboxy group, such as unsaturated monocarboxylic acids, such as (meth)acrylic acid, crotonic acid, β-carboxyethyl (meth)acrylate, ω-carboxy-polycaprolactone mono(meth)acrylate, 2-(meth)acryloyloxyethyl succinate, and 2-(meth)acryloyloxyethyl hexahydrophthalate, and unsaturated dicarboxylic acids such as maleic acid, fumaric acid, and itaconic acid, or half esters of the unsaturated dicarboxylic acids; methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, tridecyl (meth)acrylate, cetyl (meth)acrylate, stearyl (meth)acrylate, behenyl (meth)acrylate, cyclohexyl (meth)acrylate, 4-tert-butylcyclohexyl (meth)acrylate, isobornyl (meth)acrylate, dicyclopentanyl (meth)acrylate, benzyl (meth)acrylate, acrylamide, N,N-dimethyl (meth)acrylamide, (meth)acrylonitrile, 3-(meth)acryloylpropyltrimethoxysilane, N,N-dimethylaminoethyl (meth)acrylate, glycidyl (meth)acrylate, 2-(meth)acryloyloxyethyl acid phosphate, styrene, α-methylstyrene, p-methylstyrene, and p-methoxystyrene. The monomers may be used alone, or two or more types thereof may be used in combination.

In the present invention, "(meth)acrylic acid" refers to one or both of methacrylic acid and acrylic acid, "(meth)acrylate" refers to one or both of methacrylate and acrylate, and "(meth)acryloyl" refers to one or both of methacryloyl and acryloyl.

As a method for producing the acrylic polymer (A), a known polymerization method using as raw materials the monomer (a1) having a hydroxy group and the other monomer (a2) can be carried out, and a solution radical polymerization method is preferred because it is the simplest.

The solution radical polymerization method is a method in which each monomer as a raw material is dissolved in a solvent and a polymerization reaction is performed in the presence of a polymerization initiator. Examples of the solvent that can be used in this case include hydrocarbon solvents, such as toluene, xylene, cyclohexane, n-hexane, and octane; alcohol solvents, such as methanol, ethanol, iso-propanol, n-butanol, iso-butanol, sec-butanol, and ethylene glycol monomethyl ether; ester solvents, such as methyl acetate, ethyl acetate, n-butyl acetate, isobutyl acetate, and amyl acetate; and ketone solvents, such as acetone, methyl ethyl ketone, methyl isobutyl ketone, and cyclohexanone. The solvents may be used alone, or two or more types thereof may be used in combination.

Examples of the polymerization initiator that can be used in production of the acrylic polymer (A) include azo compounds, such as 2,2'-azobis(isobutylonitrile), 2,2'-azobis(2-methylbutyronitrile), and azobiscyanovaleric acid; organic peroxides, such as tert-butyl peroxypivalate, tert-butyl peroxybenzoate, tert-butyl peroxy-2-ethylhexanoate, di-tert-butyl peroxide, cumene hydroperoxide, benzoyl peroxide, and tert-butyl hydroperoxide; and inorganic peroxides, such as hydrogen peroxide, ammonium persulfate, potassium persulfate, and sodium persulfate. The polymerization initiators

may be used alone, or two or more types thereof may be used in combination. In addition, the polymerization initiator is preferably used in an amount of 0.1 to 12% by mass based on the total of the monomers as the raw materials for the polymer (A).

With the polymerization initiator, if necessary, a chain transfer agent, such as lauryl mercaptan, octylmercaptan, 2-mercaptoethanol, octyl thioglycollate, 3-mercaptopropionic acid, or $\alpha$-methylstyrene dimer may also be used.

The acid value of the acrylic polymer (A) is preferably 0.1 to 15 mgKOH/g, more preferably 0.5 to 10 mgKOH/g, and even more preferably 1 to 8 mgKOH/g since the balance of usable time and curability is more improved.

The hydroxyl value of the polymer (A) is preferably 10 to 200 mgKOH/g, more preferably 30 to 150 mgKOH/g, and even more preferably 40 to 130 mgKOH/g since the balance of usable time and curability is more improved.

The acid value and the hydroxyl value of the acrylic polymer in the present invention are values measured in accordance with JIS K 0070-1992 Test Method.

The weight average molecular weight (Mw) of the acrylic polymer (A) is preferably 2000 to 50000 and more preferably 4000 and 20000. Here, the weight average molecular weight (Mw) is a value calculated in terms of polystyrene by gel permeation chromatography (hereinafter referred to as "GPC") measurement.

Examples of the polyisocyanate compound (B) include aromatic diisocyanate compounds, such as tolylene diisocyanate, diphenylmethane diisocyanate, m-xylylene diisocyanate, and m-phenylene bis(dimethylmethylene) diisocyanate; and aliphatic or alicyclic diisocyanate compounds, such as hexamethylene diisocyanate, lysine diisocyanate, 1,3-bis(isocyanatomethyl)cyclohexane, 2-methyl-1,3-diisocyanatocyclohexane, 2-methyl-1,5-diisocyanatocyclohexane, 4,4'-dicyclohexylmethane diisocyanate, and isophorone diisocyanate.

As the polyisocyanate compound (B), a prepolymer having an isocyanate group obtained by an addition reaction of the diisocyanate compound with a polyhydric alcohol; a compound having an isocyanurate ring obtained by cyclization and trimerization of the diisocyanate compound; a polyisocyanate compound having a urea bond or a biuret bond obtained by a reaction of the diisocyanate compound with water; a homopolymer of an acrylic monomer having an isocyanate group, such as 2-isocyanatoethyl (meth)acrylate, 3-isopropenyl-$\alpha,\alpha$-dimethylbenzyl isocyanate, or (meth)acryloyl isocyanate; a copolymer having an isocyanate group obtained by copolymerization of the acrylic monomer having an isocyanate group with a monomer, such as another acrylic monomer, a vinyl ester compound, a vinyl ether compound, an aromatic vinyl monomer, or fluoroolefin; or the like may be used.

The polyisocyanate compounds (B) can be used alone, or two or more types thereof may be used in combination. It is preferable to include a compound having three or more isocyanate groups in a molecule since solvent resistance and hot water resistance are more improved.

The quaternary ammonium salt (C) will now be described. The quaternary ammonium salt (C) serves as a curing catalyst to accelerate a reaction between a hydroxy group of the polymer (A) and an isocyanate group of the polyisocyanate compound (C).

The quaternary ammonium carbonate (C) is represented by general formula (1), and examples include monoalkyl carbonates, such as tetramethylammonium octyl carbonate, methyltriethylammonium octyl carbonate, ethyltrimethylammonium octyl carbonate, propyltrimethylammonium hexyl carbonate, butyltrimethylammonium butyl carbonate, pentyltrimethylammonium propyl carbonate, hexyltrimethylammonium methyl carbonate, heptyltrimethylammonium methyl carbonate, octyltrimethylammonium methyl carbonate, nonyltrimethylammonium methyl carbonate , decyltrimethylammonium methyl carbonate, undecyltrimethylammonium methyl carbonate, dodecyltrimethylammonium methyl carbonate, tridecyltrimethylammonium methyl carbonate, tetradecyltrimethylammonium methyl carbonate, heptadecyltrimethylammonium methyl carbonate, hexadecyltrimethylammonium methyl carbonate, heptadecyltrimethylammonium methyl carbonate, octadecyltrimethylammonium methyl carbonate, tributylmethylammonium methyl carbonate, trioctylmethylammonium methyl carbonate, tridodecylmethylammonium methyl carbonate, tetrabutylammonium methyl carbonate, tetrahexylammonium methyl carbonate, tetraoctylammonium methyl carbonate, and tetradodecylammonium methyl carbonate; and hydrogencarbonates, such as tetramethylammonium bicarbonate, tetraethylammonium bicarbonate, tetra-n-propyl ammonium bicarbonate, tetra-n-butylammonium bicarbonate, triethylmonomethyl ammonium bicarbonate, tri-n-propylmonomethyl ammonium bicarbonate, tri-n-butylmonomethylammonium bicarbonate, and tri-n-butylmonoethylammonium bicarbonate. Among these, monoalkyl carbonates are preferred, and monoalkyl carbonates having one or more methyl groups on a nitrogen atom are more preferred. The quaternary ammonium carbonates (C) may be used alone, or two or more types thereof may be used in combination.

In the curable composition of the present invention, the equivalent ratio (NCO/OH) of the isocyanate group (NCO) of the polyisocyanate compound (B) to the hydroxy group (OH) of the polymer (A) is preferably 0.2 to 2, and more preferably 0.5 to 1.5 since solvent resistance and hot water resistance is more improved.

The content of the quaternary ammonium carbonate (C) in the curable composition of the present invention is 0.4 to 3% by mass relative to the solid content of the acrylic polymer (A), but preferably 0.5 to 2.0% by mass, and more preferably 0.5 to 1.5% by mass since the balance between usable time, solvent resistance, and hot water resistance is more improved.

The curable composition of the present invention is one containing the acrylic polymer (A), the polyisocyanate

compound (B), and the quaternary ammonium carbonate (C), and as another blend, an inorganic pigment, an organic pigment, an extender pigment, a colored pigment, a high-gloss pigment, a cellulose derivative, a wax, a surfactant, a stabilizer, a flow modifier, a dye, a leveling agent, a rheology control agent, an ultraviolet absorber, an antioxidant, a plasticizer, an antistat, an antifoaming agent, a viscosity modifier, a light resistance stabilizer, a weather resistance stabilizer, a heat resistance stabilizer, a pigment dispersant, or the like may be used.

The curable composition of the present invention can easily form a cured product such as a cured coating film and a molded product because of a long usable time and excellent curability.

A method for forming the cured product can be selected according to various applications. Examples of the method include a method in which the curable composition is applied to a substrate and then cured at 25 to 150°C and a method in which the curable composition is poured into a molding die and then cured at 60 to 150°C.

A method for applying the curable composition of the present invention depends on an article to be coated, and examples thereof include methods by a gravure coater, a roll coater, a comma coater, a knife coater, an air knife coater, a curtain coater, a kiss coater, a shower coater, a wheel coater, a spin coater, dipping, screen printing, spraying, an applicator, a bar coater, and brushing.

Further, the curable composition of the present invention can be diluted with an organic solvent to adjust the coating material to a viscosity suitable for the coating method. Examples of this organic solvent include aromatic hydrocarbon solvents, such as toluene and xylene; alcohol solvents, such as methanol, ethanol, isopropanol, t-butanol, propylene glycol monomethyl ether, propylene glycol n-propyl ether, ethylene glycol monobutyl ether, and diacetone alcohol; ester solvents, such as ethyl acetate, butyl acetate, isobutyl acetate, n-propyl acetate, propylene glycol monomethyl ether acetate, and ethyl 3-ethoxypropionate; and ketone solvents, such as methyl ethyl ketone, methyl isobutyl ketone, diisobutyl ketone, and cyclohexanone. The solvents may be used alone, or two or more types thereof may be used in combination.

The curable composition of the present invention can form a cured coating film having excellent appearance and coating film physical properties on the surface of various articles, and thus can be suitably used as a coating material.

Examples of an article having a cured coating film formed using the curable composition of the present invention include interior and exterior materials of various vehicles such as an automobile and a railway vehicle; interior and exterior materials of industrial machines and architectures such as an exterior wall, a roof, glass, a decorative laminated sheet, and wood floor; civil engineering members such as a sound-proof wall and a drainage ditch; casings for household electrical appliances such as a television, a refrigerator, a laundry machine, and an air conditioner; casings for electronic devices such as a personal computer, a smartphone, a cellular phone, a digital camera, and a game console; and casings for OA equipment such as a printer and a facsimile.

[Examples]

Hereinafter, the present invention will be described in detail with reference to specific examples. The acid value and the hydroxyl value of the acrylic polymer were measured in accordance with JIS K 0070-1992 Test Method, and the weight average molecular weight (Mw) was measured under the following GPC measurement conditions.

[GPC Measurement Conditions]

Measuring apparatus: high-speed GPC device ("HLC-8220GPC" manufactured by TOSOH CORPORATION)
Column: the following columns manufactured by TOSOH CORPORATION were connected in series for use.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Eluent: tetrahydrofuran (THF)
Flow rate: 1.0 mL/min
Injection volume: 100 μL (tetrahydrofuran solution in which the sample concentration was 4 mg/mL)
Standard sample: a standard curve was created using each of the following monodisperse polystyrenes.

(Monodisperse Polystyrenes)

"TSKgel standard polystyrene A-500" available from TOSOH CORPORATION
"TSKgel standard polystyrene A-1000" available from TOSOH CORPORATION
"TSKgel standard polystyrene A-2500" available from TOSOH CORPORATION
"TSKgel standard polystyrene A-5000" available from TOSOH CORPORATION
"TSKgel standard polystyrene F-1" available from TOSOH CORPORATION
"TSKgel standard polystyrene F-2" available from TOSOH CORPORATION
"TSKgel standard polystyrene F-4" available from TOSOH CORPORATION
"TSKgel standard polystyrene F-10" available from TOSOH CORPORATION
"TSKgel standard polystyrene F-20" available from TOSOH CORPORATION
"TSKgel standard polystyrene F-40" available from TOSOH CORPORATION
"TSKgel standard polystyrene F-80" available from TOSOH CORPORATION
"TSKgel standard polystyrene F-128" available from TOSOH CORPORATION
"TSKgel standard polystyrene F-288" available from TOSOH CORPORATION
"TSKgel standard polystyrene F-550" available from TOSOH CORPORATION

(Synthesis Example 1: Synthesis of Acrylic Polymer (A-1) Having Hydroxy Group)

Into a flask equipped with a condenser, a thermometer, a dropping funnel, and a stirrer, 397.0 parts by mass of butyl acetate was placed, and the inner temperature was increased to 120°C. Next, a mixture of 200.0 parts by mass of styrene, 200.0 parts by mass of methyl methacrylate, 270.0 parts by mass of isobutyl methacrylate, 320.0 parts by mass of 2-hydroxyethyl methacrylate, 10.0 parts by mass of methacrylic acid, 150.0 parts by mass of n-butyl acetate, and 50.0 parts by mass of t-butyl peroxy-2-ethylhexanoate was added dropwise over 4 hours. After that, a polymerization reaction was performed for 17 hours while the inner temperature was maintained at 120°C. Then, butyl acetate was additionally fed to obtain a solution of acrylic polymer (A-1) having a hydroxy group with a non-volatile content of 65% by mass. The polymer had a solution acid value of 4.3 mgKOH/g, a solution hydroxyl value of 81.5 mg·KOH/g, and a weight average molecular weight (Mw) of 10,000.

(Synthesis Example 2: Synthesis of Acrylic Polymer (A-2) Having Hydroxy Group)

A solution of acrylic polymer (A-2) having a hydroxy group with a nonvolatile content of 65% by mass was obtained in the same manner as in Synthesis Example 1, except that the amount of t-butylperoxy-2-ethylhexanoate was changed to 100.0 parts by mass. The polymer had a solution acid value of 4.1 mgKOH/g, a solution hydroxyl value of 81.0 mg·KOH/g, and a weight average molecular weight (Mw) of 7,000.

(Synthesis Example 3: Synthesis of Trioctylmethylammonium Methyl Carbonate)

In a high-pressure sealed vessel, 240.0 g of methanol, 194.4 parts by mass of trioctylamine, and 385.2 parts by mass of dimethyl carbonate were added. After the air inside the vessel was purged with nitrogen, a reaction was allowed to proceed at 140°C for 15 hours. After cooling, methanol and unreacted dimethyl carbonate were removed by an evaporator to obtain trioctylmethylammonium methyl carbonate.

(Example 1: Preparation and Evaluation of Curable Composition (1))

A curable resin composition (1) was obtained by blending 100.0 parts by mass of a solution of the acrylic polymer (A-1) having a hydroxy group obtained in Synthesis Example 1, 28.1 parts by mass of polyisocyanate (SUMIDUR N-3300 manufactured by Sumika Covestro Urethane Co., Ltd.), and 0.35 parts by mass of trioctylmethylammonium methyl carbonate.

(Examples 2 to 4: Preparation and Evaluation of Curable Compositions (2) to (5))

Curable compositions (2) to (5) were obtained in the same manner as in Example 1 except that the blend was changed as listed in Table 1.

(Comparative Examples 1 to 4: Preparation and Evaluation of Curable Compositions (R1) to (R4))

Curable compositions (R1) to (R4) were obtained in the same manner as in Example 1 except that the blend was changed as listed in Table 2.

[Preparation of Coating Material]

To each of the curable compositions obtained above, a mixed solvent (xylene/butyl acetate/propylene glycol monomethyl ether acetate/ethyl 3-ethoxypropionate = 50/30/10/10 (mass ratio)) was added to obtain a coating material having a viscosity adjusted to about 10 seconds with an NK-2 Iwata viscosity cup (manufactured by Anest Iwata Corporation).

[Evaluation of Usable Time]

The initial viscosity (in seconds) of the coating material obtained above immediately after blending and the viscosity (in seconds) after storage at 23°C for 1 hour were measured with an NK-2 Iwata viscosity cup (manufactured by Anest Iwata Corporation), and the usable time was evaluated according to the following criteria. The viscosity at 23°C was measured.

A: After 1 hour, flowable and viscosity is less than twice the initial viscosity.
B: After 1 hour, flowable but viscosity is two or more times and less than three times the initial viscosity.
C: After 1 hour, flowable but viscosity is three or more times the initial viscosity.
D: After 1 hour, not flowable.

[Production of Cured Coating Film]

The coating materials obtained above were applied to substrates (ABS and PP) by spraying. The applied coating materials were then allowed to stand for 10 minutes, dried at 80°C for 30 minutes, and further allowed to stand at 23°C for 2 hours to obtain cured coating films on the substrates. The film thickness was 30 μm.

[Evaluation of Curability]

The cured coating film (PP substrate) obtained above was peeled off from the substrate, cut into a size of 50 mm × 50 mm, weighed, then immersed in acetone, and removed after 24 hours. The removed cured coating film was dried at 100°C for 60 minutes and weighed again. The gel fraction was calculated from the mass of the cured coating film before and after immersion in acetone according to the formula below, and the curability was evaluated according to the following criteria.

Gel fraction (%) = (cured coating film mass after immersion)/(cured coating film mass before immersion) × 100

A: Gel fraction of 90% or more
B: Gel fraction of 80% or more and less than 90%
C: Gel fraction of 70% or more and less than 80%
D: Gel fraction of 70% or less

[Evaluation of Solvent Resistance]

A drop of xylene was put on the cured coating film (ABS substrate) obtained above with a 2-mL poly dropper and allowed to stand at 23°C for 1 minute, and then the xylene was wiped off with a soft cloth. The appearance of the coating film was evaluated according to the following criteria.

A: No trace left
B: Trace left on part of the coating film
C: Trace left on the entire coating film
D: Coating film dissolved, substrate exposed

[Hot Water Resistance Test]

The cured coating film (ABS substrate) obtained above was aged at 23°C for 7 days. Then, after immersion in water (tap water) heated to 50°C for 240 hours, the appearance was visually checked and evaluated for hot water resistance according to the following criteria.

A: No change
B: Coating film slightly whitened
C: Coating film strongly whitened

The blend compositions and evaluation results of the curable compositions (1) to (5) and (R1) to (R4) obtained above are listed in Tables 1 and 2.

[Table 1]

| Table 1 | | Ex. 1 | Ex. 2 | Ex. 3 | Ex. 4 | Ex. 5 |
|---|---|---|---|---|---|---|
| Curable composition | | (1) | (2) | (3) | (4) | (5) |
| Composition (parts by mass) | Solution of acrylic polymer (A-1) having hydroxy group (nonvolatile content 65% by mass) | 100.0 | 100.0 | 100.0 | | 100.0 |
| | Solution of acrylic polymer (A-2) having hydroxy group (nonvolatile content 65% by mass) | | | | 100.0 | |
| | Polyisocyanate compound (B-1) | 28.1 | 28.1 | 28.1 | 28.1 | 28.1 |
| | Trioctylmethylammonium methyl carbonate | 0.35 | 0.78 | | 0.78 | 1.60 |
| | Tetramethylammonium methyl carbonate | | | 0.78 | | |
| Evaluation result | Usable time | A | A | A | A | B |
| | Curability | B | A | A | A | A |
| | Solvent resistance | A | A | A | A | A |
| | Hot water resistance | A | A | A | A | B |

[Table 2]

| Table 2 | | Comp. Ex. 1 | Comp. Ex. 2 | Comp. Ex. 3 | Comp. Ex. 4 |
|---|---|---|---|---|---|
| Curable composition | | (R1) | (R2) | (R3) | (R4) |
| Composition (parts by mass) | Solution of acrylic polymer (A-1) having hydroxy group (nonvolatile content 65% by mass) | 100.0 | 100.0 | 100.0 | 100.0 |
| | Polyisocyanate compound (B-1) | 28.1 | 28.1 | 28.1 | 28.1 |
| | Trioctylmethylammonium methyl carbonate | 0.19 | 4.00 | | |
| | Tetrabutylammonium acetate | | | 0.65 | |
| | Trioctylmethylammonium acetate | | | | 0.97 |
| Evaluation result | Usable time | A | D | A | A |
| | Curability | C | A | A | A |
| | Solvent resistance | C | A | A | A |
| | Hot water resistance | C | C | C | C |

From the evaluation results of Examples 1 to 4, it was confirmed that the curable compositions of the present invention have a long usable time, excellent curability, and excellent solvent resistance and hot water resistance.

On the other hand, Comparative Example 1 is an example in which the amount of the quaternary ammonium salt (C) relative to the acrylic polymer (A) having a hydroxy group is smaller than 0.4% by mass, which is the lower limit of the present invention, and it was confirmed that the curability, solvent resistance, and hot water resistance were insufficient.

Comparative Example 2 is an example in which the amount of the quaternary ammonium salt (C) relative to the acrylic polymer (A) having a hydroxy group is greater than 3% by mass, which is the upper limit of the present invention, and it was confirmed that the usable time and hot water resistance were insufficient.

Comparative Examples 3 and 4 are examples in which quaternary ammonium acetate was used instead of the quaternary ammonium salt (C), which is an essential component of the present invention, and it was confirmed that the hot water resistance was insufficient.

## Claims

1. A curable composition comprising an acrylic polymer (A) having a hydroxy group, a polyisocyanate compound (B), and a quaternary ammonium salt (C) represented by general formula (1), wherein a content of the quaternary ammonium salt (C) is 0.4 to 3% by mass relative to the polymer (A):

[Formula 1]

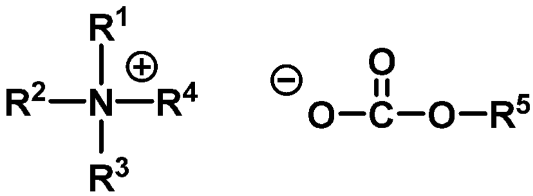

(1)

in general formula (1), $R^1$ to $R^4$ each independently represent an alkyl group having 1 to 18 carbon atoms, and $R^5$ represents an alkyl group having 1 to 8 carbon atoms or a hydrogen group.

2. The curable composition according to claim 1, wherein the polyisocyanate compound (B) comprises a compound having three or more isocyanate groups in a molecule.

3. The curable composition according to claim 1, wherein the quaternary ammonium salt (C) is a quaternary ammonium monoalkyl carbonate.

4. A cured product of the curable composition according to any one of claims 1 to 3.

## INTERNATIONAL SEARCH REPORT

International application No.
**PCT/JP2024/010920**

**A. CLASSIFICATION OF SUBJECT MATTER**

***C08G 18/62***(2006.01)i; ***C08G 18/16***(2006.01)i; ***C08G 18/72***(2006.01)i
FI: C08G18/62 016; C08G18/72; C08G18/16

According to International Patent Classification (IPC) or to both national classification and IPC

**B. FIELDS SEARCHED**

Minimum documentation searched (classification system followed by classification symbols)

C08G18/00-18/87; C08G71/00-71/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-084426 A (TOSOH CORP.) 12 May 2014 (2014-05-12) claims 1-4, paragraphs [0040]-[0043], [0069]-[0076], examples 1-3, table 1 | 1-4 |
| X | JP 2014-118531 A (TOSOH CORP.) 30 June 2014 (2014-06-30) claims 1-4, paragraphs [0048]-[0051], [0077]-[0102], examples 1, 4-7, 10-21, tables 1-4 | 1-4 |
| X | JP 2013-091767 A (TOSOH CORP.) 16 May 2013 (2013-05-16) claims 1-4, paragraphs [0049]-[0052], [0078]-[0099], examples 8-10, 12-16, tables 2-4 | 1-4 |
| A | JP 2004-339320 A (TOSOH CORP.) 02 December 2004 (2004-12-02) claims 1-8, examples | 1-4 |
| A | JP 08-325519 A (DAICEL HUELS LTD.) 10 December 1996 (1996-12-10) claim 1, examples | 1-4 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/010920**

| Patent document cited in search report | Publication date (day/month/year) | Patent family member(s) | Publication date (day/month/year) |
|---|---|---|---|
| JP 2014-084426 A | 12 May 2014 | (Family: none) | |
| JP 2014-118531 A | 30 June 2014 | US 2015/0344727 A1<br>claims 1-8, paragraphs [0052]-[0055], [0081]-[0106], examples 1, 4-7, 10-21, tables 1-4<br>WO 2014/098177 A1<br>EP 2937369 A1<br>CN 104884495 A<br>KR 10-2015-0096420 A | |
| JP 2013-091767 A | 16 May 2013 | (Family: none) | |
| JP 2004-339320 A | 02 December 2004 | (Family: none) | |
| JP 08-325519 A | 10 December 1996 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3867879 B